# EUROPEAN PATENT APPLICATION

(11) **EP 3 804 583 A1**
(43) Date of publication of application: **14.04.2021**
(21) Application number: 20151725.7
(22) Date of filing: 14.01.2020
(51) Int. Cl.: A47J 36/24

(54) **CHAFING DISH**

(30) Priority: 11.10.2019 CN 201910965168
(71) Applicant: Risheng Catering Technology (Guangdong) Co., Ltd., Taishan 529245 (CN)
(72) Inventor: Yu, Liming, Taishan, 529245 (CN); Zhou, Jingfu, Taishan, 529245 (CN); Zhu, Lin, Taishan, 529245 (CN)
(74) Representative: Zaboliene, Reda

(57) **Abstract**

The invention discloses a basin-free and dry combustion type temperature-controlled buffet stove, including a cover, a damping connector, a base frame, a control panel and a power board, wherein the cover is composed of a glass plate wrapped with a circle of heat insulation rubber, the damping connector is composed of a shell, a movable component and a fixed frame component, the base frame is composed of an internal frame and an external frame; in addition, the shell of the damping connector is fixed on the cover, the fixed frame component is fixed on behind the external frame of the base frame, the cover and base frame are hinged through the damping connector, the front of external frame of the base frame is equipped with the control panel, the back of the control panel is equipped with a temperature sensor, the power board is equipped with a high-voltage interface and a low-voltage interface, the high-voltage power supply received by the power board is connected to the power interface of an electric heating pipe through the high-voltage interface, and low-voltage interface is provided with a power circuit and a signal transmission circuit, and the low-voltage power supply is transmitted to the control panel through the low-voltage interface.

## Description

### Technical field

The invention relates to the technical field of buffet stove, in particular to a basin-free and dry combustion type temperature-controlled buffet stove.

### Technical background

At present, the structure of cover of most of the buffet stove is single and does not have the function of discharging water vapor, and then the water vapor flow into the dish basin or outside the stove, affecting the taste of food and the cleanness and beauty of the stove. Moreover, the heating temperature at the bottom of the stove is uneven, resulting in food burning and local heating problems. In addition, there is no thermal insulation equipment at the bottom of the stove, which causes the burnout of desktop or the scald of users, as well as the waste of thermal energy resources. Moreover, there is no the function of safety lock, which will cause risk due to misoperation sometimes, and the circuit setting is also relatively simple, and the work of a long time will cause pressure to circuit and cause safety accident.

### Contents of utility model

In view of the above mentioned technical problems in related technologies, the invention proposes a basin-free and dry combustion type temperature-controlled buffet stove, which can overcome the above shortcomings of existing technologies.

For the above technical purposes, the technical scheme of the invention is as follows:
A basin-free and dry combustion type temperature-controlled buffet stove, including a cover and a base frame. The cover and the base frame are hinged through a damping connector, and the buffet stove is provided with an external power supply, wherein:
The cover is composed of a glass plate surrounded by a circle of heat insulation rubber, and the bottom of the cover is provided with a water collecting ring;
The damping connector includes a shell, and the shell is fixed and connected to the glass plate, the shell is equipped with a fixing hole A, a fixing hole B and a fixing hole C. The damping connector is consists of a movable component and a fixed component, the movable component includes a left connection bracket, and the left connection bracket is spliced with an end cover. The end cover is connected to a linear buffer, the outer surface of the linear buffer is sleeved with a pressure spring; the other end of the linear buffer is connected to a main shaft. Both upper and lower sides of the main shaft are equipped with a guide rail, and the main shaft is also equipped with main shaft teeth and a subshaft tooth socket. The main shaft is sleeved with a subshaft, and the subshaft is equipped with a main shaft tooth socket and subshaft teeth. The main shaft teeth are clamped on the main shaft tooth socket, and the subshaft teeth are clamped on the subshaft tooth socket. In addition, the subshaft is equipped with a sleeve plug, and the sleeve plug is fixed and connected to a sleeve plug groove. The sleeve plug groove is set on a right connection bracket, the main shaft, the subshaft, and the sleeve plug and the sleeve plug groove are sleeved with a shaft sleeve. The interior of the shaft sleeve is equipped with a slide groove, and the slide groove is in slip connection with the guide rail. The end cover is also equipped with a threaded hole A, the shaft sleeve is also equipped with a threaded hole B and a threaded hole C. The threaded hole A and the fixing hole A, the threaded hole B and the fixing hole B, and the threaded hole C and the fixing hole C are respectively fixed and connected through screws. The assembly of fixed frame includes a left damping bracket, a right damping bracket and a fixed connection component, wherein the left damping bracket is spliced with the left connection bracket, the right damping bracket is spliced with the right connection bracket, the fixed connection component is equipped with a sump tank B, the sump tank B is equipped with a stream intake B, the left damping bracket and the right damping bracket are fixed and connected with the fixed connection component, and the fixed connection component is fixed and connected to the back of the base frame;
The base frame includes an external frame and an internal frame. The external frame and the internal frame are connected through a sump tank, and the back of the sump tank is equipped with a stream intake, the place under the stream intake is equipped with a water tank, and the place under the damping connector is equipped with a water tank groove. The water tank groove is set on the external frame, the water tank is set on the water tank groove, the back of the external frame is equipped with a power interface of electric heating pipe, and the bottom of the internal frame is equipped with an electric heating pipe. The electric heating pipe passed through the internal frame is fixed and connected to the power interface of electric heating pipe, the internal corner of the internal frame is equipped with a fixed component A, and the place above the fixed component A is equipped with a cooling panel. The cooling panel is located on the electric heating pipe, the place above the cooling panel is equipped with a dish basin, and the bottom of the internal frame is equipped with a clamping edge. The four corners on the bottom of the internal frame is equipped with a fixed component B, the place under the fixed component B is fixed and connected with an insulating plate, and the edge of the insulating plate is clamped with a clamping edge. The insulating plate is equipped with a connection component, the edge of the connection component is clamped to the inner side of the external frame and the bottom of the connection component is fixed and connected with a bottom plate. The place under the bottom plate is equipped with a foot pad, and the front of the external frame is equipped with a control panel;
The control panel is equipped with a switching button, a menu button, a safety lock button, a display screen, a heating button and a desuperheating button. The control panel is connected with a temperature sensor;
The external power supply includes a power board, and the power board is equipped with a high-voltage interface and a low-voltage interface. The high-voltage interface is connected with an electric heating pipe and a temperature protector in serial, the low-voltage interface is connected with a power circuit and a signal transmission circuit, and the power board is also equipped with a protective tube.

Furthermore, the cooling panel is provided with several cooling holes in array.

Furthermore, the edge of the connection component clamped with the inner side of the external frame is a rounded corner.

Furthermore, there are 4 connection components.

Furthermore, the foot pad is made of rubber.

Furthermore, there are 4 foot pads.

Furthermore, the high-voltage interface is connected with a live wire and a neutral line.

Furthermore, the shell of the damping connector is connected to the ground wire.

The beneficial effect of the invention: the cover of the buffet stove is equipped with a water collecting ring, the condensed water can be effectively isolated and prevented from leaking along the edge of the cover when the cover is closed, and the condensed water can be prevented from flowing outside by opening the cover. The electric heating pipe is equipped with a cooling panel, the local heat emitted by the electric heating pipe can heat evenly through the cooling holes on the cooing panel, the heat from the heating tube can be evenly distributed at the bottom of the dish basin through the cooling holes, the dish basin can be heated evenly, and the problem of uneven heating resulting in burning and local heating can be prevented. In addition, the bottom of the base frame is provided with an insulating plate and a bottom plate for double-layer heat insulation to prevent the high temperature of the heating tube from emitting from the bottom, the burnout of desktop or scald of user; on the other hand, the double-layer heat insulation prevent the heat exchange between the temperature of the heating tube and the surrounding cold air, so as to play a certain role in heat preservation and heat accumulation. The control panel is equipped with a safety lock button, by which the current temperature can be locked after setting the temperature required. At this time, the function of other buttons will fail. The function of safety lock can be released and the function of other buttons can be recovered by pressing the safety lock button for a long time. Therefore, the misoperation in public can be prevented. Moreover, the buffet stove is equipped with an external power supply, featured with a three fault protection design. Firstly, the power board is equipped with a protective tube. When the circuit fails, the fuse will be burnt out and the power supply will be stopped. Secondly, the power board and the control panel are equipped with a signal transmission circuit therebetween. When the temperature sensor senses that the temperature emitted by the heating pipe is higher than the preset danger value, the control panel will transmit the order of outage to the power board to stop the power supply in an emergency. Thirdly, the connection circuit of the heating pipe is equipped with a temperature protector. When the temperature control fails, the temperature protector will be subject to thermal physical deformation according to the temperature of the heating pipe. If the temperature is too high, the temperature protector will be disconnected and the power supply to the heating tube will be stopped until the temperature is reduced.

### Figure description

In order to describe the embodiment of the invention or the technical proposal of the existing technology, the figures required in the embodiment will be introduced simply. Obviously, the figures described below refer to some embodiments of the invention only. For ordinary technicians in the field, other figures can be obtained from these drawings without any creative effort.
Fig.1 Overall structure diagram of the basin-free and dry combustion type temperature-controlled buffet stove according to the embodiment of the invention;
Fig.2 Disassembly structure diagram of base frame of the basin-free and dry combustion type temperature-controlled buffet stove according to the embodiment of the invention;
Fig.3 Assembly structure diagram of base frame of the basin-free and dry combustion type temperature-controlled buffet stove according to the embodiment of the invention;
Fig.4 Disassembly structure diagram of damping connector of the basin-free and dry combustion type temperature-controlled buffet stove according to the embodiment of the invention;
Fig.5 Assembly structure diagram of damping connector of the basin-free and dry combustion type temperature-controlled buffet stove according to the embodiment of the invention;
Fig.6 Structure diagram of shaft sleeve of the basin-free and dry combustion type temperature-controlled buffet stove according to the embodiment of the invention;
Fig.7 Schematic diagram of a complete machine of external power supply of the basin-free and dry combustion type temperature-controlled buffet stove according to the embodiment of the invention;

In the figure:
100. Cover; 101. Heat insulation rubber; 102. Glass plate; 103.Water collecting ring;
200. Damping connector; 201. Left connection bracket; 202. End cover; 203. Linear buffer; 204. Pressure spring; 205. Main shaft; 206. Subshaft; 207. Shaft sleeve; 208. Right connection bracket; 209. Main shaft teeth; 210. Main shaft tooth socket; 211. Subshaft teeth; 212. Subshaft tooth socket; 213. Guide rail; 214. Slide groove; 215. Sleeve plug; 216. Sleeve plug groove; 217. Shell; 218. Threaded hole A; 219. Threaded hole B; 220. Threaded hole C; 221. Fixing hole A; 222. Fixing hole B; 223. Fixing hole C; 224. Fixed connection component; 225. Left damping bracket; 226. Right damping bracket; 227. Sump tank B; 228. Stream intake B;
300. Base frame; 301. External frame; 302. Internal frame; 303. Water tank groove; 304. Water tank; 305. Power interface of electric heating pipe; 306. Sump tank ; 307. Stream intake ; 308. Dish basin; 309. Cooling panel; 310. Cooling hole; 311. Electric heating pipe; 312. Fixed component A; 313. Fixed component B; 314. Clamping edge; 315. Insulating plate; 316. Connection component; 317. Bottom plate; 318. Foot pad;
400. Control panel; 401. Switching button; 402. Menu button; 403. Safety lock button; 404. Display screen; 405. Heating button; 406. Desuperheating button; 407. Temperature sensor;
500. Power board; 501. High-voltage interface; 502. Low-voltage interface; 503. Protective tube; 504. Temperature protector; 505. Power circuit; 506. Signal transmission circuit.

### Specific implementation mode

A clear and complete description of the technical scheme of the embodiment will be given below in combination with the figures of the embodiment of the invention. Obviously, the embodiment described is only a part of the invention and not all of the embodiments. Based on the embodiment in the invention, all other embodiments obtained by ordinary technicians in the field are in the scope of the protection of the invention.

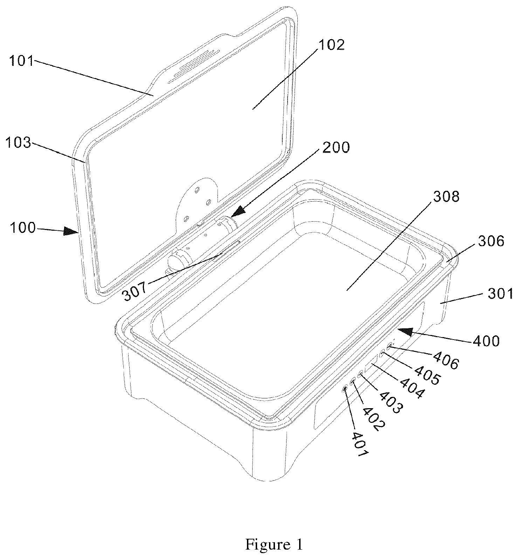

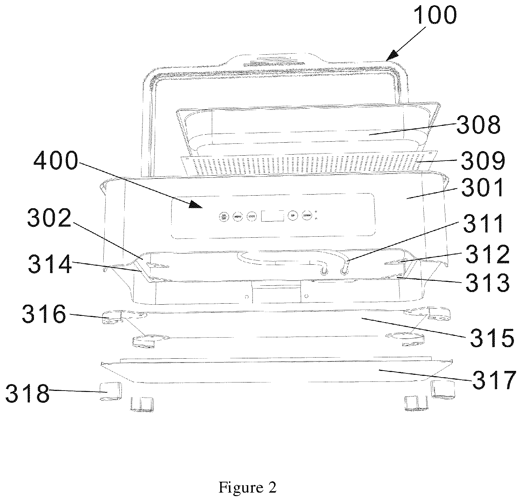

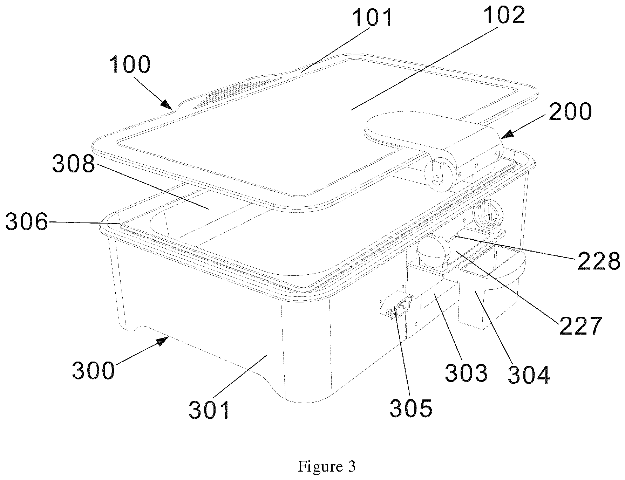

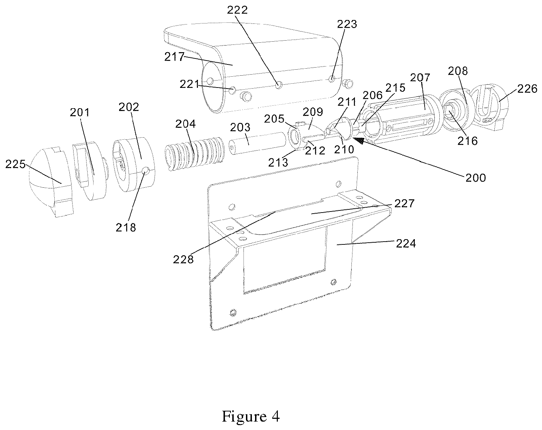

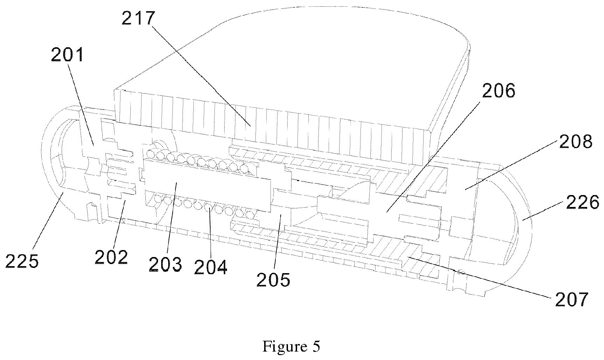

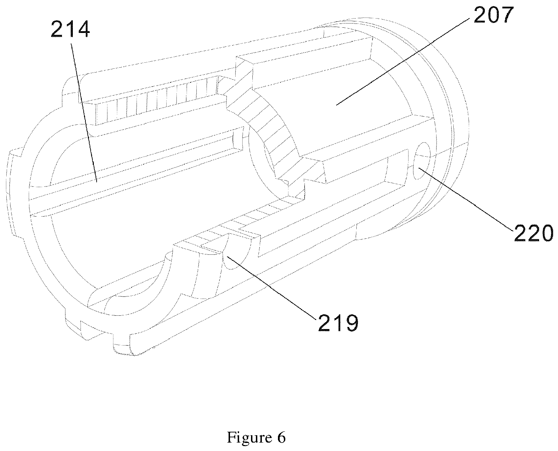

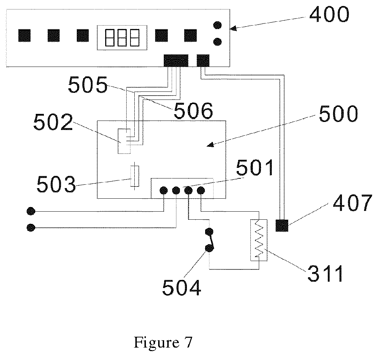

As shown in Fig.1-7, the basin-free and dry combustion type temperature-controlled buffet stove according to the embodiment of the invention includes a cover 100 and a base frame 300. The cover 100 and the base frame 300 are hinged through a damping connector 200, and the buffet stove is provided with an external power supply, wherein:
The cover 100 is composed of a glass plate 102 surrounded by a circle of heat insulation rubber 101, and the bottom of the cover 100 is provided with a water collecting ring 103;
The damping connector 200 includes a shell 217, and the shell 217 is fixed and connected to the glass plate 102, the shell 217 is equipped with a fixing hole A 221, a fixing hole B 222 and a fixing hole C 223. The damping connector 200 is consists of a movable component and a fixed component, the movable component includes a left connection bracket 201, and the left connection bracket 201 is spliced with an end cover 202. The end cover 202 is connected to a linear buffer 203, the outer surface of the linear buffer 203 is sleeved with a pressure spring 204; the other end of the linear buffer 203 is connected to a main shaft 205. Both upper and lower sides of the main shaft 205 are equipped with a guide rail 213, and the main shaft 205 is also equipped with main shaft teeth 209 and a subshaft tooth socket 212. The main shaft 205 is sleeved with a subshaft 206, and the subshaft 206 is equipped with a main shaft tooth socket 210 and subshaft teeth 211. The main shaft teeth 209 are clamped on the main shaft tooth socket 210, and the subshaft teeth 211 are clamped on the subshaft tooth socket 212. In addition, the subshaft 206 is equipped with a sleeve plug 215, and the sleeve plug 215 is fixed and connected to a sleeve plug groove 216. The sleeve plug groove 216 is set on a right connection bracket 208, the main shaft 205, the subshaft 206, and the sleeve plug 215 and the sleeve plug groove 216 are sleeved with a shaft sleeve 207. The interior of the shaft sleeve 207 is equipped with a slide groove 214, and the slide groove 214 is in slip connection with the guide rail 213. The end cover 202 is also equipped with a threaded hole A 218, and the shaft sleeve 207 is also equipped with a threaded hole B 219 and a threaded hole C 220. The threaded hole A 218 and the fixing hole A 221, the threaded hole B 219 and the fixing hole B 222, and the threaded hole C 220 and the fixing hole C 223 are respectively fixed and connected through screws. The assembly of fixed frame includes a left damping bracket 225, a right damping bracket 226 and a fixed connection component 224, wherein the left damping bracket 225 is spliced with the left connection bracket 201, the right damping bracket 226 is spliced with the right connection bracket 208, the fixed connection component 224 is equipped with a sump tank B 227, the sump tank B 227 is equipped with a stream intake B 228, the left damping bracket 225 and the right damping bracket 226 are fixed and connected with the fixed connection component 224, and the fixed connection component 224 is fixed and connected to the back of the base frame 300;
The base frame 300 includes an external frame 301 and an internal frame 302. The external frame 301 and the internal frame 302 are connected through a sump tank 306, and the back of the sump tank 306 is equipped with a stream intake 307, the place under the stream intake 307 is equipped with a water tank 304, and the place under the damping connector 200 is equipped with a water tank groove 303. The water tank groove 303 is set on the external frame 301, the water tank 304 is set on the water tank groove 303, the back of the external frame 301 is equipped with a power interface of electric heating pipe 305, the bottom of the internal frame 302 is equipped with an electric heating pipe 311. The electric heating pipe 311 passed through the internal frame 301 is fixed and connected to the power interface of electric heating pipe 305, the internal corner of the internal frame 302 is equipped with a fixed component A 312, and the place above the fixed component A 312 is equipped with a cooling panel 309. The cooling panel 309 is located on the electric heating pipe 311, the place above the cooling panel 309 is equipped with a dish basin 308, and the bottom of the internal frame 302 is equipped with a clamping edge 314. The four corners on the bottom of the internal frame 302 is equipped with a fixed component B 313, the place under the fixed component B 313 is fixed and connected with an insulating plate 315, and the edge of the insulating plate 315 is clamped with a clamping edge 314. The insulating plate 315 is equipped with a connection component 316, the edge of the connection component 316 is clamped to the inner side of the external frame 301, and the bottom of the connection component 316 is fixed and connected with a bottom plate 317. The place under the bottom plate 317 is equipped with a foot pad 318, and the front of the external frame 301 is equipped with a control panel 400;
The control panel 400 is equipped with a switching button 401, a menu button 402, a safety lock button 403, a display screen 404, a heating button 405 and a desuperheating button 406. The control panel 400 is connected with a temperature sensor 407;
The external power supply includes a power board 500, and the power board 500 is equipped with a high-voltage interface 501 and a low-voltage interface 502. The high-voltage interface 501 is connected with an electric heating pipe 311 and a temperature protector 504 in serial, the low-voltage interface 502 is connected with a power circuit 505 and a signal transmission circuit 506, and the power board 500 is also equipped with a protective tube 503.

In the embodiment, the cooling panel 309 is provided with several cooling holes in array.

In the embodiment, the edge of the connection component 316 clamped with the inner side of the external frame 301 is a rounded corner.

In the embodiment, there are 4 connection components 316.

In the embodiment, the foot pad 318 is made of rubber.

Preferably, there are 4 foot pads 318.

In the embodiment, the high-voltage interface 501 is connected with a live wire and a neutral line.

In the embodiment, the shell 217 of the damping connector 200 is connected to the ground wire.

In order to facilitate the understanding of the technical scheme of the invention, the technical scheme of the invention is described in detail in terms of specific usage.

In specific use, the basin-free and dry combustion type temperature-controlled buffet stove of the invention is composed of five parts, i.e. cover, base frame, damping connector, control panel and external power supply, wherein the cover of the buffet stove is equipped with a water collecting ring, which can collect the condensed water and prevent the same from flowing outside. The base frame is equipped with an electric heating pipe, and the electric heating pipe is equipped with a cooling panel, and the place above the cooling panel is equipped with a dish basin. When the external power supply is electrified, the electric heating pipe will be heated, and the dish basin will be evenly heated through the cooling panel. The control panel is connected with a temperature sensor, which will sense the temperature emitted from the electric heating pipe after electrifying, and display the temperature sensed on the display screen. At this point, the temperature value to be set can be converted and transmitted to the power board through the control panel, and then the power board will adjust the working strength of the heating pipe to adjust the temperature emitted from the heating pipe. For the damping connector, the shell will drive the end cover and shaft sleeve connected through screws to rotate when the cover is opened, the subshaft within the shaft sleeve is fixed on the right connection bracket through screws, the guide rail of the main shaft is arranged in the shaft sleeve, so the main shaft will move right while rotating together with the shaft sleeve when the cover is opened. The main shaft teeth, the main shaft tooth socket, the subshaft teeth and the subshaft tooth socket are moving to close to each other; namely, the main shaft and the subshaft are close to each other slowly, and the distances among the main shaft teeth, the main shaft tooth socket, the subshaft teeth and the subshaft tooth socket are decreasing. At the moment, the resilience of the pressure spring is expanded, the linear buffer is in a releasing and resetting state, and the cover can be opened easily due to the auxiliary torque of the linear buffer. When the cover is closed, the shell and the shaft sleeve will rotate reversely, the main shaft will move left by rotating reversely together with the shaft sleeve while closing the cover. The main shaft teeth, the main shaft tooth socket, the subshaft teeth and the subshaft tooth socket are moving to separate from each other; namely, the main shaft and the subshaft are separated from each other slowly, and the distances among the main shaft teeth, the main shaft tooth socket, the subshaft teeth and the subshaft tooth socket are increasing. At the moment, the pressure spring is shrunk by compressing, the linear buffer is in a shrinking and compressing sate, and the cover will drop slowly due to the buffer effect of the pressure spring and linear buffer. In the external circuit, there is a protective tube. When the circuit fails, the fuse will be burnt out and the power supply will be stopped. The power board and the control panel are equipped with a signal transmission circuit therebetween. When the temperature sensor senses that the temperature emitted by the heating pipe is higher than the preset danger value, the control panel will transmit the order of outage to the power board to stop the power supply in an emergency. The connection circuit of the heating pipe is equipped with a temperature protector. When the temperature control fails, the temperature protector will be subject to thermal physical deformation according to the temperature of the heating pipe. If the temperature is too high, the temperature protector will be disconnected and the power supply to the heating tube will be stopped, and the shrunk temperature protector will be reconnected when the temperature is reduced.

To sum up, the invention can prevent water from flowing outside by setting a water collecting ring to gather condensed water, realize even heating of dish basin through the cooling panel arranged in the electric heating plate, and prevent the problem of food burning and delayed local heating. In addition, the bottom of the base frame is provided with an insulating plate and a bottom plate for double-layer heat insulation to prevent the burnout of desktop or scald of user; on the other hand, the double-layer heat insulation plays a certain role in heat preservation and heat accumulation. Moreover, the setting of safety lock button can prevent misoperaion and ensure the safety of dining through the design of three fault protection.

The contents above are only a better embodiment of the utility model and are not used to limit the utility model. Any modification, equivalent replacement, improvement and the like made within the spirit and principles of the utility model shall be included in the protection scope of the utility model.

## Claims

1. A basin-free and dry combustion type temperature-controlled buffet stove, including a cover (100) and a base frame (300). The cover (100) and the base frame (300) are hinged through a damping connector (200), and the buffet stove is provided with an external power supply, wherein:
The cover (100) is composed of a glass plate (102) surrounded by a circle of heat insulation rubber (101), and the bottom of the cover (100) is provided with a water collecting ring (103);
The damping connector (200) includes a shell (217), and the shell (217) is fixed and connected to the glass plate (102), the shell (217) is equipped with a fixing hole A (221), a fixing hole B (222) and a fixing hole C (223). The damping connector (200) is consists of a movable component and a fixed component, the movable component includes a left connection bracket (201), and the left connection bracket (201) is spliced with an end cover (202). The end cover (202) is connected to a linear buffer (203), the outer surface of the linear buffer (203) is sleeved with a pressure spring (204); the other end of the linear buffer (203) is connected to a main shaft (205). Both upper and lower sides of the main shaft (205) are equipped with a guide rail (213), and the main shaft (205) is also equipped with main shaft teeth (209) and a subshaft tooth socket (212). The main shaft (205) is sleeved with a subshaft (206), and the subshaft (206) is equipped with a main shaft tooth socket (210) and subshaft teeth (211). The main shaft teeth (209) are clamped on the main shaft tooth socket (210), and the subshaft teeth (211) are clamped on the subshaft tooth socket (212). In addition, the subshaft (206) is equipped with a sleeve plug (215), and the sleeve plug (215) is fixed and connected to a sleeve plug groove (216). The sleeve plug groove (216) is set on a right connection bracket (208), the main shaft (205), the subshaft (206), the sleeve plug (215) and the sleeve plug groove (216) are sleeved with a shaft sleeve (207). The interior of the shaft sleeve (207) is equipped with a slide groove (214), and the slide groove (214) is in slip connection with the guide rail (213). The end cover (202) is also equipped with a threaded hole A (218), the shaft sleeve (207) is also equipped with a threaded hole B (219) and a threaded hole C (220). The threaded hole A (218) and the fixing hole A (221), the threaded hole B (219) and the fixing hole B (222), and the threaded hole C (220) and the fixing hole C (223) are respectively fixed and connected through screws. The assembly of fixed frame includes a left damping bracket (225), a right damping bracket (226) and a fixed connection component (224), wherein the left damping bracket (225) is spliced with the left connection bracket (201), the right damping bracket (226) is spliced with the right connection bracket (208), the fixed connection component (224) is equipped with a sump tank B (227), the sump tank B (227) is equipped with a stream intake B (228), the left damping bracket (225) and the right damping bracket (226) are fixed and connected with the fixed connection component (224), and the fixed connection component (224) is fixed and connected to the back of the base frame (300);
The base frame (300) includes an external frame (301) and an internal frame (302). The external frame (301) and the internal frame (302) are connected through a sump tank (306), and the back of the sump tank (306) is equipped with a stream intake (307), the place under the stream intake (307) is equipped with a water tank (304), and the place under the damping connector (200) is equipped with a water tank groove (303). The water tank groove (303) is set on the external frame (301), the water tank (304) is set on the water tank groove (303), the back of the external frame (301) is equipped with a power interface of electric heating pipe (305), and the bottom of the internal frame (302) is equipped with an electric heating pipe (311). The electric heating pipe (311) passed through the internal frame (301) is fixed and connected to the power interface of electric heating pipe (305), the internal corner of the internal frame (302) is equipped with a fixed component A (312), and the place above the fixed component A (312) is equipped with a cooling panel (309). The cooling panel (309) is located on the electric heating pipe (311), the place above the cooling panel (309) is equipped with a dish basin (308), and the bottom of the internal frame (302) is equipped with a clamping edge (314). The four corners on the bottom of the internal frame (302) is equipped with a fixed component B (313), the place under the fixed component B (313) is fixed and connected with an insulating plate (315), and the edge of the insulating plate (315) is clamped with a clamping edge (314). The insulating plate (315) is equipped with a connection component (316), the edge of the connection component (316) is clamped to the inner side of the external frame (301), and the bottom of the connection component (316) is fixed and connected with a bottom plate (317). The place under the bottom plate (317) is equipped with a foot pad (318), and the front of the external frame (301) is equipped with a control panel (400);
The control panel (400) is equipped with a switching button (401), a menu button (402), a safety lock button (403), a display screen (404), a heating button (405) and a desuperheating button (406). The control panel (400) is connected with a temperature sensor (407);
The external power supply includes a power board (500), and the power board (500) is equipped with a high-voltage interface (501) and a low-voltage interface (502). The high-voltage interface (501) is connected with an electric heating pipe (311) and a temperature protector (504) in serial, the low-voltage interface (502) is connected with a power circuit (505) and a signal transmission circuit (506), and the power board (500) is also equipped with a protective tube (503).

2. According to the basin-free and dry combustion type temperature-controlled buffet stove of claim 1, wherein the cooling panel (309) is provided with several cooling holes in array.

3. According to the basin-free and dry combustion type temperature-controlled buffet stove of claim 1, wherein the edge of the connection component (316) clamped with the inner side of the external frame (301) is a rounded corner.

4. According to the basin-free and dry combustion type temperature-controlled buffet stove of claim 3, wherein there are 4 connection components (316).

5. According to the basin-free and dry combustion type temperature-controlled buffet stove of claim 1, wherein the foot pad (318) is made of rubber.

6. According to the basin-free and dry combustion type temperature-controlled buffet stove of claim 1, wherein there are 4 foot pads (318).

7. According to the basin-free and dry combustion type temperature-controlled buffet stove of claim 1, wherein the high-voltage interface (501) is connected with a live wire and a neutral line.

8. According to the basin-free and dry combustion type temperature-controlled buffet stove of claim 1, wherein the shell (217) of the damping connector (200) is connected to the ground wire.
